# EUROPEAN PATENT SPECIFICATION

(11) **EP 3 190 539 B1**
(45) Date of publication and mention of the grant of the patent: **07.11.2018**
(21) Application number: 16150451.9
(22) Date of filing: 07.01.2016
(51) Int. Cl.: G06K 7/10

(54) **TARGET DETECTION BY RFID READER**
ZIELERKENNUNG DURCH RFID-LESER
DÉTECTION DE CIBLE PAR LE LECTEUR RFID

(43) Date of publication of application: 12.07.2017
(73) Proprietor: Panthronics AG, 8041 Graz (AT)
(72) Inventor: Pieber, Michael, 8062 Kumberg (AT); Jongsma, Jakob, 8042 Graz (AT)
(74) Representative: Röggla, Harald

(56) References cited:
- EP-A1- 1 630 713
- US-A1- 2006 238 301

## Description

### FIELD OF THE INVENTION

The present invention relates to a reader with an antenna that transmits a HF field with a carrier frequency and receives an analog input signal with the antenna, which analog input signal may be load modulated with a modulation frequency, and outputs digital data detected in the input signal, which reader comprises a mixer that mixes the input signal with a carrier frequency signal and provides a mixed output signal and target detection means to detect the presence of a target in the HF field and to activate processing of the load modulated analog input signal to communicate with the target.

### BACKGROUND OF THE INVENTION

An integrated circuit for such a reader has been sold by company AMS as type AS3911B NFC/HF Reader IC. This radio frequency identification (RFID) reader is used for payment applications. The RFID reader communicates with active or passive transponders or smart cards. In a typical application a passive smart card stores payment information of a user to electronically pay with the smart card. The reader is powered and generates a high frequency (HF) magnetic field with its antenna. When the reader and the smart card are within close proximity of each other, the reader generated magnetic field is induced into the antenna of the smart card and used to power the smart card. The smart card also has a transceiver to receive the signal from the reader and to transmit a response back to the reader.

There are standards like ISO/IEC18000-3 or ISO/IEC 14.443 Type A and B or ISO15.693 or ECMA-340 13,56 MHz Near Field Communication (NFC) or company standards like Felica from company Sony that define protocols and types of modulation used to transmit information between the tag or smart card and the reader. Some or all of these standards define that the reader transmits data to the tags by changing the magnitude of its transmitted power. Tags receive the transmitted signal and process the received data. The activated tag or smart card then replies by transmitting data to the reader. A typical technique is to use load modulation, for which the tag varies the load impedance of its coil by changing its resonance frequency and its quality factor. This action causes a voltage variation at the reader antenna.

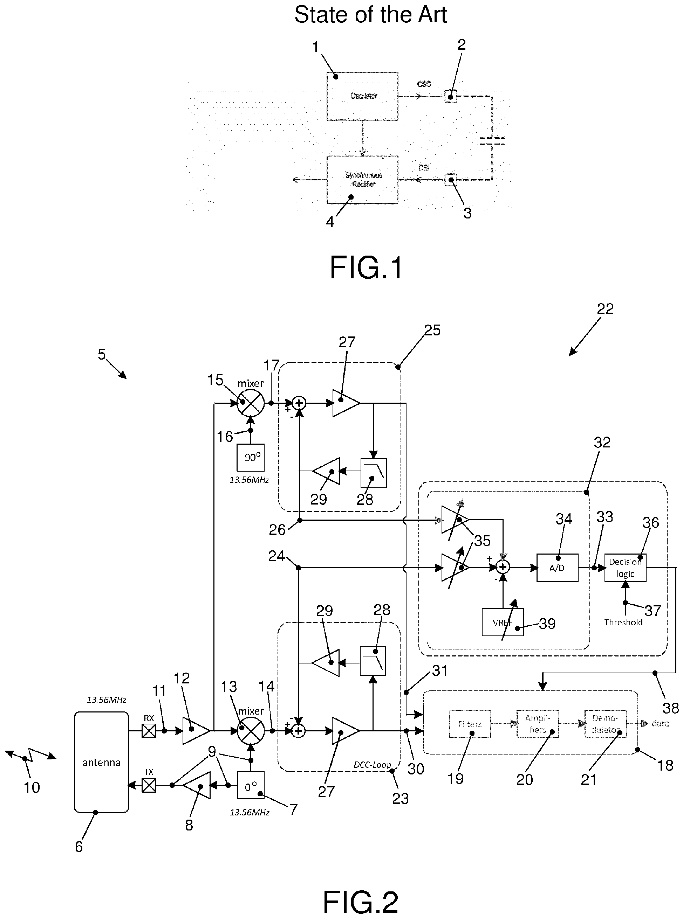

Above referenced reader IC of company AMS comprises target detection means shown in Figure 1 to detect the presence of a smart card in the HF field to wake-up the reader. Upon detection of a smart card in the HF field the reader IC activates processing of the load modulated analog input signal to communicate with the smart card. The target detection means comprise an oscillator 1 connected to an excitation electrode 2 that emits an electromagnetic field in the range of a few hundred kHz and a sensing electrode 3 to sense the electromagnetic field. The target detection means are based on a capacitive principle and the amount of charge generated in the sensing electrode 3 represents the capacitance between the two electrodes 2 and 3. The presence of a target and in particular the presence of a smart card or tag in the electromagnetic field changes such capacitance between the two electrodes 2 and 3. A synchronous rectifier 4 connected to the sensing electrode 3 is used to detect the charge generated. This yields a DC output voltage, which is linearly proportional to the capacitance between the excitation electrode 2 and the sensing electrode 3. The output DC voltage of the synchronous rectifier 4 is used to wake-up the reader to start the communication with the smart card or tag.

Drawback of this reader with the reader IC of AMS is that the target detection means with its two metal electrodes and additional oscillator and synchronous rectifier add hardware on-chip add cost. Furthermore the tag detection means generate an electromagnetic field in additional to the electromagnetic field used to communicate with the smart card what increases the electromagnetic noise in the area of the reader.

### SUMMARY OF THE INVENTION

It is a target of the invention to provide a reader and target detection means for such a reader that is better integrated into the rest of the signal processing in the reader and that is easier to realize.

This target is achieved with a reader and target detection means for such a reader that comprises:
low-pass filter means to eliminate signal components of the mixed output signal at the modulation frequency and above and to provide a filtered output signal;
quantification means that quantify the filtered output signal and provide quantified detection data;
decision means that compare the quantified detection data with a threshold to provide a target detected information, while the threshold is set in-between quantified detection data received with and without a target present in the HF field.

This provides the advantage that no additional HF field with another frequency than the HF field used for the communication between the reader and the smart card or tag is used to detect the presence of the target in the HF field. Therefore the antenna and oscillator part of the reader for the communication with the smart card or tag can be used for the target detection means as well. Due to low-pass filtering there is no disturbing effect for the detection of a target in the HF field by load modulation of another target in the HF field or noise or other irrelevant amplitudes in higher frequencies.

The target detection means are based on the principle of inductive detection of the target in the HF field. A target within the HF field results in a phase offset between the carrier frequency signal generated in the reader to generate the HF field and the carrier frequency received with the antenna. This phase offset is detected by the target detection means as claimed.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figures 1 shows a target detection means according to the state of the art.
Figure 2 shows part of a reader with a target detection means according to the invention.

### DETAILED DESCRIPTION OF EMBODIMENTS

Figure 2 shows part of a RFID reader 5 with an antenna 6. Reader 5 according to this embodiment of the invention communicates with a tag or smart card according to the ECMA-340 13,56 MHz Near Field Communication NFC standard, which NFC Standard in-cooperates communication based on ISO/IEC 14.443 Type A and B and Felica, a company standard from company Sony. Reader 5 furthermore comprises an oscillator 7 and an amplifier 8 to generate a carrier frequency signal 9 to emit a HF field 10 with 13,56 MHz via antenna 6 and to transmit data to one or more tags or smart cards. Such a tag is for instance disclosed in document US 7,890,080 B2 .

When reader 5 and the smart card are within close proximity of each other, reader 5 generated HF field 10 is induced into the antenna of the smart card and used to power the smart card. The smart card also has a transceiver to receive data transmitted within the HF field from reader 5 and to transmit a load modulated response back to reader 5. Load modulation is processed with one of the modulation frequencies defined in the standard like 106, 212, 424 or 848kbps. Reader 5 comprises an amplifier 12 to amplify the response from the smart card received as load modulated analog input signal 11. Reader 5 furthermore comprises an in-phase mixer 13 that mixes input signal 11 with the 13,56 MHz carrier frequency signal 9 and provides an in-phase component 14 of the down-converted input signal. Reader 5 furthermore comprises a quadrature-phase mixer 15 that mixes input signal 11 with a 90° phase shifted carrier frequency signal 16 and provides a quadrature-phase component 17 of the down-converted input signal. In-phase component 14 and quadrature-phase component 17 consist of:
- a DC component due to the phase offset between carrier frequency signal 9 and input signal 11, which DC component changes when a target enters HF field 10.
- Amplitude modulation which rides on top of the DC component.
- Higher frequency mixing products n x 13,56 MHz (where n = 1, 2, 3...).

Reader 5 furthermore comprises processing means 18 with filters 19 and amplifiers 20 and a demodulator 21 to process the in-phase component 14 and the quadrature-phase component 17 to detect data load modulated in input signal 11. In this way reader 5 may receive data with information from a tag or smart card present in the HF field 10. Processing means 18 furthermore comprise elements, not shown in Figure 2, to transmit information to a tag or smart card present in the HF filed 10 to enable a communication between reader 5 and such a tag or smart card in the HF field 10. To reduce power consumption of processing means 18 a power save mode is activated if for a period of time no tag or smart card is present in HF field 10.

Reader 5 comprises target detection means 22 to detect the presence of a target like a smart card or a tag in HF field 10 and to activate processing means 18. Target detection means 22 comprise in-phase low-pass filter means 23 to eliminate signal components of in-phase component 14 above approximately one-tenth of the modulation frequency and to provide a filtered output signal 24. Target detection means 22 furthermore comprise quadrature-phase low-pass filter means 25 to eliminate signal components of the quadrature-phase component 17 above the modulation frequency and to provide a filtered output signal 26.

To achieve that low-pass filter means 23 and 25 comprise a HF amplifier 27 and a low-pass filter 28 and a DC amplifier 29 arranged in a loop. HF amplifier 27 amplifies the in-phase component 14 and quadrature-phase component 17. Amplified components 14 and 17 are fed into low-pass filters 28 with a cut-off frequency of e.g. one-tenth of the modulation frequency to cut-off the amplitude modulation and higher frequency mixing products. DC amplifiers 29 amplify and provide filtered output signals 24 and 26. Low-pass filter means 23 and 25 are furthermore built to subtract amplified filtered output signal 24 from in-phase component 14 and amplified filtered output signal 26 from quadrature-phase component 17 and feed these signals back into the HF amplifiers 27 to close the loop. This provides the advantage that filtered output signals 24 and 26 comprise a DC component that is influenced by the presence of a target in HF field 10. This provides furthermore the advantage that in-phase data signal 30 and quadrature-phase data signal 31 for further processing with processing means 18 is high-pass filtered as the DC component is largely attenuated.

Target detection means 22 furthermore comprise quantification means 32 that quantify the amplified filtered output signals 24 and 26 and provide quantified detection data 33. To achieve this quantification means 32 comprise an A/D converter 34 to provide the quantified detection data 33. One way would be to use an A/D converter 34 with a high resolution that converts input voltages from 0 Volt to e.g. 5 Volt into appropriate detection data 33. Another way would be to use an A/D converter 34 with a more limited resolution that converts only voltages from e.g. 4 to 5 Volt into appropriate detection data 33. To enable the use of such a low resolution A/D converter 34 a programmable gain amplifier 35 is used to amplify or attenuate the amplified filtered output signals 24 and 26 to adapt it for the input range of A/D converter 34. "Programmable" means that steering means of the reader, not shown in Figure 2, may program the gain of programmable gain amplifier 35 what enables to adapt filtered output signals 24 and 26 to the limited range of A/D converter 34.

Target detection means 22 furthermore comprise decision means 36 that compare the quantified detection data 33 with a threshold 37 to provide target detected information 38 which is for instance a Bit "1", if a target is detected within HF field 10, and a Bit "0", if no target is detected within HF field 10. Threshold 37 is set in-between quantified detection data 33 received with a target present in the HF field 10 and without a target present in the HF field 10. The gain programmed for gain amplifier 35 has to be taken into account. Target detection information 38 is used to activate processing means 18 in sleep mode, if a target is detected in HF field 10. After activation processing means 18 try to set-up a communication with the target in HF field 10.

Still another way to generate the target detected information 38 based on the filtered output signals 24 and 26 would be to use a simple comparator as a 1-bit A/D converter 34. For this embodiment a programmable VREF 39 would need to set the threshold. In that case 1-bit A/D converter 34 would already provide the target detected information 38.

In another embodiment of the invention only low-pass filter means 23 or 25 would be used to process either in-phase component 14 or quadrature-phase component 17. This reduces the hardware and costs of the target detection means. By using both low-pass filter means 23 and 25 to process the in-phase component 14 and the quadrature-phase component 17 provides that advantage that targets are detected independent from the phase shift in the received carrier caused by the interaction between reader and target.

Target detection means 22 of reader 5 provide the advantage that the amplitude modulation that rides on top of the DC component of in-phase component 14 and quadrature-phase component 17 and the higher frequency mixing products have no influence on the target detected information 38 as only the DC component is processed. Furthermore target detection means 22 maybe realized with a minimum amount of extra circuitry which all is in the DC domain. This extra circuitry only needs low power and overall power consumption of reader 5 is further reduced as processing means 18 may be put in power-save mode until a target is detected by target detection means 22. It is furthermore an advantage that target detection means 22 provide a fast response as their detection result is directly based on information received with antenna 6. The accuracy of the detection result is high because target detection means 22 directly receive the in-phase component 14 and the quadrature-phase component 17 from antenna 6.

It is furthermore advantageous to realize the target detection means 22 in a way to adapt the threshold 37 to a different environment of reader 5 and program or store an adapted threshold 37.

In-phase low-pass filter means 23 and quadrature-phase filter means 25 have been described to eliminate signal components of in-phase component 14 and quadrature phase component 17 at and above approximately one-tenth of the modulation frequency. It has to be stated that these low-pass filter means in other embodiments could filter as well at and above the modulation frequency or at and above one-fiftieth of the modulation frequency to achieve the advantages explained above.

## Claims

1. Reader (5) with an antenna (6) that transmits a HF field (10) with a carrier frequency and receives an analog input signal (11) with the antenna (6), which analog input signal (11) may be load modulated with a modulation frequency, and outputs digital data detected in the input signal (11), which reader (5) comprises:
a mixer (13, 15) that mixes the input signal (11) with a carrier frequency signal (9, 16) and
provides a mixed output signal (14,17);
target detection means (22) to detect the presence of a target in the HF field (10) and to activate processing of the input signal (11) to communicate with the target,
**characterized in that** the target detection means (22) comprise:
low-pass filter means (23, 25) to eliminate signal components of the mixed output signal (14,17) at the modulation frequency and above and to provide a filtered output signal (24,26);
quantification means (32) that quantify the filtered output signal (24,26) and provide quantified detection data (33);
decision means (36) that compare the quantified detection data (33) with a threshold (37) to provide a target detected information (38), while the threshold (37) is set in-between quantified detection data (33) received with and without a target present in the HF field (10).

2. Reader (5) according to claim 1, wherein the low-pass filter means (25) are furthermore built to eliminate signal components at the modulation frequency and above of a mixed quadrature output signal (17) mixed with a 90° phase shifted carrier frequency signal (16) and to provide a filtered quadrature output signal (26) fed together with the filtered output signal (24) into the quantification means (32).

3. Reader (5) according to any of the claims 1 and 2, wherein the low-pass filter means (23, 25) are arranged in a loop and comprise a HF amplifier (27) to amplify the mixed output signal (14, 17) and a low-pass filter (28) to filter the amplified mixed output signal and a DC amplifier (29) to amplify the filtered output signal (24, 26) and which low-pass filter means (23, 25) are built to subtract the amplified filtered output signal (24, 26) from the mixed output signal (14, 17) and feed it back into the HF amplifier (27).

4. Reader (5) according to any of the claims 1 to 3, wherein the quantification means (32) comprise an A/D converter (34) to provide the quantified detection data (33) and a gain amplifier (35) to amplify or attenuate the filtered output signal (24, 26) to adapt it for the input range of the A/D converter (34).

5. Reader (5) according to claim 4, wherein the gain amplifier (35) is programmable.

6. Reader (5) according to any of the claims 1 to 5, wherein the threshold (37) in the decision means (36) is programmable.

7. Reader (5) according to any of the claims 1 to 6, wherein the target detection means (22) are built to detect a smart card and/or a tag and/or another RFID device in the HF field (10).

8. Reader (5) according to any of the claims 1 to 7, wherein the low-pass filter means (23, 25) are built to eliminate signal components of the mixed output signal (14) above a tenth of the modulation frequency and above and to provide the filtered output signal (24).

9. Reader (5) according to any of the claims 3 to 8, wherein the amplified mixed output signal of the HF amplifier (27) is fed into processing means (18), performing high-pass filtering in order to detect data load modulated in input signal (11).

## Patentansprüche

1. Lesegerät (5) mit einer Antenne (6), die ein HF-Feld (10) mit einer Trägerfrequenz sendet und ein analoges Eingangssignal (11) mit der Antenne (6) empfängt, wobei das analoge Eingangssignal (11) mit einer Modulationsfrequenz lastmoduliert sein kann, und digitale Daten, die im Eingangssignal (11) detektiert werden, ausgibt, wobei das Lesegerät (5) umfasst:
einen Mischer (13, 15), der das Eingangssignal (11) mit einem Trägerfrequenzsignal (9, 16) mischt und ein gemischtes Ausgangssignal (14, 17) bereitstellt;
Zieldetektionsmittel (22), um das Vorhandensein eines Ziels im HF-Feld (10) zu detektieren und die Verarbeitung des Eingangssignals (11) zu aktivieren, um mit dem Ziel zu kommunizieren,
**dadurch gekennzeichnet, dass** die Zieldetektionsmittel (22) umfassen:
Tiefpassfiltermittel (23, 25), um Signalkomponenten des gemischten Ausgangssignals (14, 17) bei der Modulationsfrequenz und darüber zu eliminieren und ein gefiltertes Ausgangssignal (24, 26) bereitzustellen;
Quantisierungsmittel (32), die das gefilterte Ausgangssignal (24, 26) quantisieren und quantisierte Detektionsdaten (33) bereitstellen;
Entscheidungsmittel (36), welche die quantisierten Detektionsdaten (33) mit einem Schwellenwert (37) vergleichen, um eine detektierte Zielinformation (38) bereitzustellen, während die Schwelle (37) zwischen quantisierten Detektionsdaten (33), die mit und ohne einem im HF-Feld (10) vorhandenen Ziel empfangen werden, festgelegt wird.

2. Lesegerät (5) gemäß Anspruch 1, wobei die Tiefpassfiltermittel (25) darüber hinaus dazu gebaut sind, Signalkomponenten bei der Modulationsfrequenz und darüber eines gemischten Quadraturausgangssignals (17), das mit einem 90°-phasenverschobenen Trägerfrequenzsignal (16) gemischt ist, zu eliminieren und ein gefiltertes Quadraturausgangssignal (26) bereitzustellen, das zusammen mit dem gefilterten Ausgangssignal (24) zu den Quantisierungsmitteln (32) geführt wird.

3. Lesegerät (5) gemäß einem der Ansprüche 1 und 2, wobei die Tiefpassfiltermittel (23, 25) in einer Schleife angeordnet sind und einen HF-Verstärker (27) umfassen, um das gemischte Ausgangssignal (14, 17) zu verstärken, sowie einen Tiefpassfilter (28), um das verstärkte gemischte Ausgangssignal zu filtern, und einen Gleichspannungsverstärker (29), um das gefilterte Ausgangssignal (24, 26) zu verstärken, und welche Tiefpassfiltermittel (23, 25) dazu gebaut sind, das verstärkte gefilterte Ausgangssignal (24, 26) von gemischten Ausgangssignal (14, 17) zu subtrahieren und es zurück in den HF-Verstärker (27) zu führen.

4. Lesegerät (5) gemäß einem der Ansprüche 1 bis 3, wobei die Quantisierungsmittel (32) einen Analog-Digital-Umsetzer (34), um die quantisierten Detektionsdaten (33) bereitzustellen, und einen Zuwachsverstärker (35), um das gefilterte Ausgangssignal (24, 26) zu verstärken oder zu dämpfen, um es an den Eingangsbereich des Analog-Digital-Umsetzers (34) anzupassen, umfassen.

5. Lesegerät (5) gemäß Anspruch 4, wobei der Zuwachsverstärker (35) programmiert werden kann.

6. Lesegerät (5) gemäß einem der Ansprüche 1 bis 5, wobei die Schwelle (37) in den Entscheidungsmitteln (36) programmiert werden kann.

7. Lesegerät (5) gemäß einem der Ansprüche 1 bis 6, wobei die Zieldetektionsmittel (22) dazu gebaut sind, eine Smartcard und/oder eine Markierung und/oder eine andere RFID-Vorrichtung im HF-Feld (10) zu detektieren.

8. Lesegerät (5) gemäß einem der Ansprüche 1 bis 7, wobei die Tiefpassfiltermittel (23, 25) dazu gebaut sind, Signalkomponenten des gemischten Ausgangssignal (14) über einem Zehntel der Modulationsfrequenz und darüber zu eliminieren und das gefilterte Ausgangssignal (24) bereitzustellen.

9. Lesegerät (5) gemäß einem der Ansprüche 3 bis 8, wobei das verstärkte gemischte Ausgangssignal des HF-Verstärkers (27) in die Verarbeitungsmittel (18) geführt wird, wobei Hochpassfiltern durchgeführt wird, um im Eingangssignal (11) lastmodulierte Daten zu detektieren.

## Revendications

1. Lecteur (5) doté d'une antenne (6) qui transmet un champ HF (10) avec une fréquence porteuse et reçoit un signal d'entrée analogique (11) avec l'antenne (6), lequel signal d'entrée analogique (11) peut être modulé en charge avec une fréquence de modulation, et sort des données numériques détectées dans le signal d'entrée (11), lequel lecteur (5) comprend :
un mélangeur (13, 15) qui mélange le signal d'entrée (11) avec un signal de fréquence porteuse (9, 16) et fournit un signal de sortie mélangé (14, 17) ;
un moyen de détection de cible (22) pour détecter la présence d'une cible dans le champ HF (10) et pour activer le traitement du signal d'entrée (11) pour communiquer avec la cible,
**caractérisé en ce que** le moyen de détection de cible (22) comprend :
un moyen filtre passe-bas (23, 25) pour éliminer des composantes de signal du signal de sortie mélangé (14, 17) à la fréquence de modulation et au-dessus de celle-ci et pour fournir un signal de sortie filtré (24, 26) ;
un moyen de quantification (32) qui quantifie le signal de sortie filtré (24, 26) et fournit des données de détection quantifiées (33) ;
un moyen de décision (36) qui compare les données de détection quantifiées (33) à un seuil (37) pour fournir une information détectée cible (38), alors que le seuil (37) défini entre des données de détection quantifiées (33) reçues avec et sans cible présente dans le champ HF (10).

2. Lecteur (5) selon la revendication 1, dans lequel le moyen filtre passe-bas (25) est en outre construit pour éliminer des composantes de signal à la fréquence de modulation et au-dessus de celle-ci d'un signal de sortie en quadrature mélangé (17) mélangé avec un signal de fréquence porteuse décalé en phase de 90° (16) et pour fournir un signal de sortie en quadrature filtré (26) acheminé avec le signal de sortie filtré (24) dans le moyen de quantification (32).

3. Lecteur (5) selon l'une quelconque des revendications 1 et 2, dans lequel le moyen filtre passe-bas (23, 25) est agencé en une boucle et comprend un amplificateur HF (27) pour amplifier le signal de sortie mélangé (14, 17) et un filtre passe-bas (28) pour filtrer le signal de sortie mélangé amplifié et un amplificateur DC (29) pour amplifier le signal de sortie filtré (24, 26) et lequel moyen filtre passe-bas (23, 25) est construit pour soustraire le signal de sortie filtré amplifié (24, 26) du signal de sortie mélangé (14, 17) et le renvoyer à l'amplificateur HF (27).

4. Lecteur (5) selon l'une quelconque des revendications 1 à 3, dans lequel le moyen de quantification (32) comprend un convertisseur A/D (34) pour fournir les données de détection quantifiées (33) et un amplificateur de gain (35) pour amplifier ou atténuer le signal de sortie filtré (24, 26) afin de l'adapter pour la plage d'entrée du convertisseur A/D (34).

5. Lecteur (5) selon la revendication 4, dans lequel l'amplificateur de gain (35) est programmable.

6. Lecteur (5) selon l'une quelconque des revendications 1 à 5, dans lequel le seuil (37) dans le moyen de décision (36) est programmable.

7. Lecteur (5) selon l'une quelconque des revendications 1 à 6, dans lequel le moyen de détection de cible (22) est construit pour détecter une carte intelligente et/ou une étiquette et/ou un autre dispositif RFID dans le champ HF (10).

8. Lecteur (5) selon l'une quelconque des revendications 1 à 7, dans lequel le moyen filtre passe-bas (23, 25) est construit pour éliminer des composantes de signal du signal de sortie mélangé (14) au-dessus d'un dixième de la fréquence de modulation et au-dessus de celle-ci et pour fournir le signal de sortie filtré (24).

9. Lecteur (5) selon l'une quelconque des revendications 3 à 8, dans lequel le signal de sortie mélangé amplifié de l'amplificateur (27) est acheminé dans un moyen de traitement (18), réalisant un filtrage passe-haut afin de détecter des données modulées en charge dans le signal d'entrée (11).
